(19) Europäisches Patentamt / European Patent Office / Office européen des brevets

(11) **EP 4 307 168 B1**

(12) **EUROPEAN PATENT SPECIFICATION**

(45) Date of publication and mention of the grant of the patent:
**17.06.2026 Bulletin 2026/25**

(21) Application number: **22784070.9**

(22) Date of filing: **06.04.2022**

(51) International Patent Classification (IPC):
**G06V 20/52** (2022.01)   **G06N 3/063** (2023.01)
**G06V 40/20** (2022.01)   **G06V 10/25** (2022.01)
**G06V 10/62** (2022.01)   **G06V 10/74** (2022.01)
**G06V 10/94** (2022.01)   **G06V 20/20** (2022.01)

(52) Cooperative Patent Classification (CPC):
**G06V 40/23; G06V 10/25; G06V 10/62;**
**G06V 10/761; G06V 20/52;** G06N 3/063;
G06V 10/955; G06V 20/20

(86) International application number:
**PCT/CN2022/085409**

(87) International publication number:
**WO 2022/214004 (13.10.2022 Gazette 2022/41)**

(54) **TARGET USER DETERMINATION METHOD, ELECTRONIC DEVICE AND COMPUTER-READABLE STORAGE MEDIUM**

ZIELBENUTZERBESTIMMUNGSVERFAHREN, ELEKTRONISCHE VORRICHTUNG UND COMPUTERLESBARES SPEICHERMEDIUM

PROCÉDÉ DE DÉTERMINATION D'UTILISATEUR CIBLE, DISPOSITIF ÉLECTRONIQUE ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2021 CN 202110377588**

(43) Date of publication of application:
**17.01.2024 Bulletin 2024/03**

(73) Proprietor: **Huawei Technologies Co., Ltd.**
**Shenzhen, Guangdong 518129 (CN)**

(72) Inventors:
• **LIU, Xiaomeng**
  **Shenzhen, Guangdong 518129 (CN)**
• **HUANG, Lei**
  **Shenzhen, Guangdong 518129 (CN)**
• **ZHAO, Jie**
  **Shenzhen, Guangdong 518129 (CN)**
• **MA, Chunhui**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
CN-A- 110 197 171    CN-A- 110 866 450
CN-A- 111 368 810    CN-A- 111 597 975
CN-A- 112 434 666    CN-B- 104 516 496

## Description

## TECHNICAL FIELD

This application relates to the field of human-computer interaction technologies, and in particular, to a user determining method, an electronic device, and a computer-readable storage medium.

## BACKGROUND

With the emergence of terminal devices equipped with intelligent chips and cameras, in particular, large-screen terminal devices such as smart screens, various applications on the terminal devices are also rapidly developed. One type of applications on the terminal devices is related to fitness. A terminal device may identify a fitness user by using a camera, and evaluate and guide a fitness process of the user.

However, in a multi-person scenario, the terminal device needs to identify a plurality of persons within a camera range, to determine a target user. Because of a large quantity of persons, an identification speed is relatively slow and real-time performance is relatively poor.

CN 111 368 810 A discloses a sit-up detection system and method based on the human body and skeleton key point recognition.

## SUMMARY

Based on the foregoing problem, the present invention, being set out by the appended claims, provides a user identification method to lower a requirement for a hardware capability, and enable an electronic device to quickly identify a target user, so that good real-time performance is provided.

According to a first aspect, this application provides a target user determining method. The method is applied to an electronic device. The method mainly includes: obtaining a first image; determining a quantity of users included in the first image; selecting one or more users from the determined users included in the first image to perform skeleton point detection, and determining whether actions of the users match a target action; if it is detected that the actions of the selected one or more users match the target action, collecting statistics on a quantity of consecutive matching times of the users; and if the quantity of consecutive matching times meets a first condition, determining the users as a target user.

With reference to the first aspect, in some embodiments, the selecting one or more users from the users included in the first image to perform skeleton point detection includes: determining a location of each user included in the first image on a display; and selecting one or more users closer to the middle of the display for skeleton point detection.

With reference to the first aspect, in some embodiments, before the selecting one or more users from the users included in the first image to perform skeleton point detection, the method further includes: generating a first character box for a determined first user included in the first image, where the first character box surrounds an image of the first user; performing feature extraction on the user image included in the first character box, to obtain a first feature vector; and allocating a first identification code to the first character box.

With reference to the first aspect, in some embodiments, the selecting one or more users from the users included in the first image to perform skeleton point detection includes: determining whether a candidate target user exists; and if the candidate target user exists, selecting the candidate target user to perform skeleton point detection.

With reference to the first aspect, in some embodiments, the method further includes: if it is detected that the candidate target user does not match the target action, deleting the candidate target user and clearing the quantity of consecutive matching times.

With reference to the first aspect, in some embodiments, the method further includes: if the candidate target user is deleted, selecting one user from another user other than the deleted candidate target user in the users included in the first image, to perform skeleton point detection.

With reference to the first aspect, in some embodiments, the method further includes: if the actions of the users do not match the target action, obtaining a second image; and determining a quantity of users included in the second image.

With reference to the first aspect, in some embodiments, the method further includes: generating a second character box for a determined second user included in the second image, where the second character box surrounds an image of the second user; performing feature extraction on the user image included in the second character box, to obtain a second feature vector; determining whether the second feature vector is the same as the first feature vector; and if the second feature vector is the same as the first feature vector, allocating the first identification code to the second character box.

With reference to the first aspect, in some embodiments, the method further includes: obtaining the second image at an interval of a first frame quantity after the first image is obtained.

With reference to the first aspect, in some embodiments, the method further includes: A quantity of users is the same as a quantity of required participants.

With reference to the first aspect, in some embodiments, the method further includes: If a quantity of determined target users is less than the quantity of required participants, the quantity of users is a difference between the quantity of required participants and the quantity of determined target users.

With reference to the first aspect, in some embodiments, the method further includes: if the quantity of determined target users is equal to the quantity of required participants, recording a quantity of matching times between an action of the target user and a standard action, and obtaining an image at an interval of a second frame quantity; and the second frame quantity is in a direct proportion to the quantity of matching times.

According to a second aspect, this application provides an electronic device. The electronic device includes a camera, a memory, and a processor. The camera is configured to capture an image, the memory is configured to store a computer program, and the processor is configured to invoke the computer program, to enable the electronic device to perform any one of the possible implementations of the first aspect.

According to a third aspect, this application provides a computer storage medium including instructions. When the instructions are run on an electronic device, the electronic device is enabled to perform any one of the possible implementations of the first aspect.

According to a fourth aspect, this embodiment of this application provides a chip. The chip is used in an electronic device. The chip includes one or more processors. The processor is configured to invoke computer instructions, to enable the electronic device to perform any one of the possible implementations of the first aspect.

According to a fifth aspect, this embodiment of this application provides a computer program product including instructions. When the computer program product runs on a device, the electronic device is enabled to perform any one of the possible implementations of the first aspect.

It may be understood that the electronic device provided in the second aspect, the computer storage medium provided in the third aspect, the chip provided in the fourth aspect, and the computer program product provided in the fifth aspect are all configured to perform the method provided in embodiments of this application. Therefore, for beneficial effect that can be achieved by the method, refer to beneficial effect in the corresponding method. Details are not described herein.

It should be understood that descriptions of technical features, technical solutions, advantages, or similar statements in this specification do not imply that all features and advantages can be implemented in any individual embodiment. In contrast, it may be understood that the descriptions of the features or the advantages mean that at least one embodiment includes a specific technical feature, technical solution, or advantage. Therefore, the descriptions of the technical features, technical solutions, or advantages in this specification are not necessarily specific to a same embodiment. Further, the technical features, technical solutions, and advantages described in the following embodiments may be combined in any proper manner. A person skilled in the art shall understand that an embodiment may be implemented without one or more particular technical features, technical solutions, or advantages of the embodiment. In another embodiment, an additional technical feature or advantage may be identified in a specific embodiment that does not embody all embodiments.

## BRIEF DESCRIPTION OF DRAWINGS

FIG. 1 is a schematic diagram of a structure of an electronic device 100 according to an embodiment of this application;
FIG. 2 is a schematic diagram of a display interface of an electronic device according to an embodiment of this application;
FIG. 3 is a schematic diagram of another display interface of an electronic device according to an embodiment of this application;
FIG. 4 is a flowchart of a target user determining method according to an embodiment of this application;
FIG. 5 is a schematic diagram of human skeleton key points according to an embodiment of this application; and
FIG. 6 is a flowchart of another target user determining method according to an embodiment of this application.

## DESCRIPTION OF EMBODIMENTS

Terms used in the following embodiments of this application are only intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items.

The present invention is applied to an electronic device equipped with a camera. The electronic device may be a device with a large screen, such as a smart screen or a smart television, or may be a device such as a mobile phone or a tablet computer. The camera may be installed on the electronic device, or may be connected to the electronic device in a wired or wireless manner.

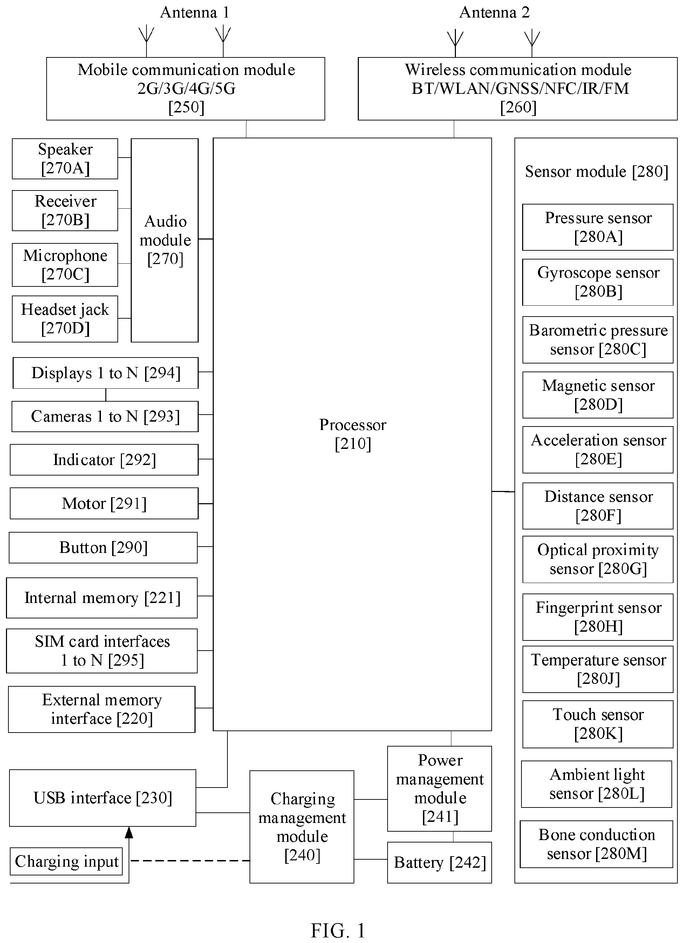

FIG. 1 is a schematic diagram of a structure of an electronic device. The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that, the structure described in this embodiment of this application does not constitute a specific limitation on the electronic device 200. In some other embodiments of this application, the electronic device 200 may include more or fewer components than those shown in the figure, or some components may be combined, or some components may be split, or there may be a different component layout. The components shown in the figure may be implemented by hardware, software, or a combination of software and hardware.

For example, when the electronic device 200 is a mobile phone or a tablet computer, the electronic device 200 may include all components in the figure, or may include only some components in the figure.

For example, when the electronic device 200 is a large-screen device such as a smart television or a smart screen, the electronic device 200 may include all components in the figure, or may include only some components in the figure.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural network processing unit (neural processing unit, NPU), and/or the like. Different processing units may be independent devices, or may be integrated into one or more processors.

The controller may be a nerve center and a command center of the electronic device 200. The controller may generate an operation control signal based on instruction operation code and a time sequence signal, to complete control of instruction fetch and instruction execution.

A memory may be further disposed in the processor 210, and is configured to store instructions and data. In some embodiments, the memory in the processor 210 is a cache memory. The memory may store instructions or data that is recently used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 210 may include a plurality of groups of I2C buses. The processor 210 may be separately coupled to the touch sensor 280K, a charger, a flash, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the electronic device 200.

The I2S interface may be configured to perform audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transfer an audio signal to the wireless communication module 260 through the I2S interface.

The PCM interface may also be configured to: perform audio communication, and sample, quantize, and encode an analog signal. In some embodiments, the audio module 270 may be coupled to the wireless communication module 260 through a PCM bus interface.

In some embodiments, the audio module 270 may alternatively transfer an audio signal to the wireless communication module 260 through the PCM interface. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication.

In some embodiments, the UART interface is usually configured to connect the processor 210 and the wireless communication module 260. For example, the processor 210 communicates with a Bluetooth module in the wireless communication module 260 through the UART interface, to implement a Bluetooth function. In some embodiments, the audio module 270 may transmit an audio signal to the wireless communication module 260 through the UART interface, to implement a function of playing music by using a Bluetooth headset.

The MIPI interface may be configured to connect the processor 210 and a peripheral device such as the display 294 or the camera 293. The MIPI interface includes a camera serial interface (camera serial interface, CSI), a display serial interface (display serial interface, DSI), or the like. In some embodiments, the processor 210 communicates with the camera 293 through the CSI interface, to implement a photographing function of the electronic device 200. The processor 210 communicates with the display 294 through the DSI interface, to implement a display function of the electronic device 200.

The GPIO interface may be configured by software. The GPIO interface may be configured as a control signal. Alternatively, the GPIO interface may be configured as a data signal. In some embodiments, the GPIO interface may be configured to connect the processor 210 to the camera 293, the display 294, the wireless communication module 260, the audio module 270, the sensor module 280, or the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB type-C interface, or the like. The USB interface 230 may be configured to connect to the charger to charge the electronic device 200, or may be configured to transmit data between the electronic device 200 and the peripheral device, or may be configured to connect to a headset to play audio by using the headset. The interface may be further configured to connect to another electronic device such as an AR device.

It may be understood that, an interface connection relationship between the modules described in this embodiment of this application is only an example for description, and does not constitute a limitation on the structure of the electronic device 200. In some other embodiments of this application, the electronic device 200 may alternatively use an interfacing manner different from that in the foregoing embodiment, or use a combination of a plurality of interfacing manners.

The charging management module 240 is configured to receive a charging input from the charger. The charger may be a wireless charger or a wired charger. In some embodiments of wired charging, the charging management module 240 may receive a charging input from the wired charger through the USB interface 230. In some embodiments of wireless charging, the charging management module 240 may receive a wireless charging input by using a wireless charging coil of the electronic device 200. The charging management module 240 supplies power to the electronic device by using the power management module 241 while charging the battery 242.

The power management module 241 is configured to connect to the battery 242, the charging management module 240, and the processor 210. The power management module 241 receives an input from the battery 242 and/or the charging management module 240, and supplies power to the processor 210, the internal memory 221, an external memory, the display 294, the camera 293, the wireless communication module 260, and the like. The power management module 241 may be further configured to monitor a parameter such as a battery capacity, a quantity of battery cycles, or a battery health status (electric leakage or impedance).

In some other embodiments, the power management module 241 may alternatively be disposed in the processor 210. In some other embodiments, the power management module 241 and the charging management module 240 may alternatively be disposed in a same device.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a solution applied to the electronic device 200 for wireless communication such as 2G/3G/4G/5G. The mobile communication module 250 may include at least one filter, a switch, a power amplifier, a low noise amplifier (low noise amplifier, LNA), and the like. The mobile communication module 250 may receive an electromagnetic wave by using the antenna 1, perform processing such as filtering or amplification on the received electromagnetic wave, and transmit the received electromagnetic wave to the modem processor for demodulation. The mobile communication module 250 may further amplify a signal modulated by the modem processor, and convert the signal into an electromagnetic wave for radiation by using the antenna 1.

In some embodiments, at least some functional modules of the mobile communication module 250 may be disposed in the processor 210. In some embodiments, at least some functional modules of the mobile communication module 250 and at least some modules of the processor 210 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 270A, the receiver 270B, or the like), or displays an image or a video by using the display 294. In some embodiments, the modem processor may be an independent device. In some other embodiments, the modem processor may be independent of the processor 210, and is disposed in a same device as the mobile communication module 250 or another functional module.

The wireless communication module 260 may provide a wireless communication solution that is applied to the electronic device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 260 may be one or more devices integrating at least one communication processing module. The wireless communication module 260 receives an electromagnetic wave by using the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation by using the antenna 2.

In some embodiments, the antenna 1 and the mobile communication module 250 in the electronic device 200 are coupled, and the antenna 2 and the wireless communication module 260 in the electronic device 200 are coupled, so that the electronic device 200 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 200 implements the display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, or the like, for example, a teaching video and a user action picture video in this embodiment of this application. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 200 may include one or N displays 294, and N is a positive integer greater than 1.

The electronic device 200 may implement the photographing function by using the ISP, the camera 293, the video codec, the GPU, the display 294, the application processor, and the like.

The ISP is configured to process data fed back by the camera 293. For example, during photographing, a shutter is pressed, light is transmitted to a camera photosensitive element through a lens, an optical signal is converted into an electrical signal, and the camera photosensitive element transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 293.

The camera 293 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV In some embodiments, the electronic device 200 may include one or N cameras 293, and N is a positive integer greater than 1.

The digital signal processor is configured to process a digital signal, and may process another digital signal in addition to the digital image signal. For example, when the electronic device 200 selects a frequency, the digital signal processor is configured to perform Fourier transform or the like on frequency energy.

The video codec is configured to compress or decompress a digital video. The electronic device 200 may support one or more types of video codecs. In this way, the electronic device 200 may play or record videos in a plurality of coding formats, such as moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, such as a transfer mode between human brain neurons, and may further continuously perform self-learning. Applications such as intelligent cognition of the electronic device 200 may be implemented through the NPU, such as image identification, facial identification, voice identification, and text understanding.

In this embodiment of this application, the NPU or another processor may be configured to perform an operation such as analysis and processing on an image in a video stored in the electronic device 200.

The external memory interface 220 may be configured to connect to an external memory card, such as a micro SD card, to increase a storage capability of the electronic device 200. The external memory card communicates with the processor 210 through the external memory interface 220, to implement a data storage function. For example, a file such as music or a video is stored in the external storage card.

The internal memory 221 may be configured to store computer-executable program code. The executable program code includes instructions. The processor 210 runs the instructions stored in the internal memory 221, to perform various function applications and data processing of the electronic device 200. The internal memory 221 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 200.

In addition, the internal memory 221 may include a high-speed random access memory, and may further include a non-volatile memory such as at least one magnetic disk memory, a flash memory, or a universal flash storage (universal flash storage, UFS).

The electronic device 200 may implement an audio function by using the audio module 270, the speaker 270A, the receiver 270B, the microphone 270C, the headset jack 270D, the application processor, and the like.

The audio module 270 is configured to convert a digital audio signal into an analog audio signal for output, and also configured to input an analog audio to convert into a digital audio signal. The audio module 270 may be configured to encode and decode an audio signal. In some embodiments, the audio module 270 may be disposed in the processor 210. Alternatively, some function modules in the audio module 270 are disposed in the processor 210.

The speaker 270A, also referred to as a "loudspeaker", is configured to convert an audio electrical signal into a sound signal. The electronic device 200 may be configured to listen to music or answer a hands-free call by using the speaker 270A. For example, the speaker may play a comparison analysis result provided in this embodiment of this application.

The receiver 270B, also referred to as an "earpiece", is configured to convert an electrical audio signal into a sound signal. When the electronic device 200 is configured to answer a call or receive voice information, the receiver 270B may be placed close to a human ear to listen to a voice.

The microphone 270C, also referred to as a "mike" or a "mic", is configured to convert a sound signal into an electrical signal. When making a call or sending voice information, a user may speak with the mouth approaching the microphone 270C, to input a sound signal to the microphone 270C. At least one microphone 270C may be disposed in the electronic device 200. In some other embodiments, two microphones 270C may be disposed in the electronic device 200, to collect a sound signal and further implement a noise reduction function. In some other embodiments, three, four, or more microphones 270C may alternatively be disposed in the electronic device 200, to collect a sound signal, reduce noise, identify a sound source, implement a directional recording function, and the like.

The headset jack 270D is configured to connect to a wired headset. The headset jack 270D may be the USB interface 230, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed in the display 294. There are a plurality of types of pressure sensors 280A, such as a resistive pressure sensor, an inductive pressure sensor, and a capacitive pressure sensor. The capacitive pressure sensor may include at least two parallel plates made of conductive materials. Capacitance between electrodes changes when a force is acting on the pressure sensor 280A. The electronic device 200 determines pressure intensity based on the change of the capacitance. When a touch operation is performed on the display 294, the electronic device 200 detects a touch operation intensity by using the pressure sensor 280A. The electronic device 200 may further calculate a touch position based on a detection signal of the pressure sensor 280A.

In some embodiments, touch operations that are performed in a same touch position but have different touch operation intensities may correspond to different operation instructions. For example, when a touch operation, whose touch operation intensity is less than a first pressure threshold, is performed on an SMS message application icon, an instruction for viewing an SMS message is performed. When a touch operation, whose touch operation intensity is greater than or equal to the first pressure threshold, is performed on the SMS message application icon, an instruction for creating a new SMS message is performed.

The gyroscope sensor 280B may be configured to determine a motion attitude of the electronic device 200. In some embodiments, an angular velocity of the electronic device 200 around three axes (namely, x, y, and z axes) may be determined by using the gyroscope sensor 280B. The gyroscope sensor 280B may be configured to implement image stabilization during photographing. For example, when a shutter is pressed, the gyroscope sensor 280B detects a shaking angle of the electronic device 200, and calculates, based on the angle, a distance for which a lens module needs to compensate, to allow a lens to cancel shaking of the electronic device 200 through reverse motion, to implement the image stabilization. The gyroscope sensor 280B may be further used in a navigation scenario and a somatic game scenario.

The barometric pressure sensor 280C is configured to measure barometric pressure. In some embodiments, the electronic device 200 calculates an altitude by using a barometric pressure value measured by the barometric pressure sensor 280C, to assist positioning and navigation.

The magnetic sensor 280D includes a Hall sensor. The electronic device 200 may detect opening or closing of a flip leather case by using the magnetic sensor 280D. In some embodiments, when the electronic device 200 is a flip phone, the electronic device 200 may detect opening or closing of a flip cover based on the magnetic sensor 280D. Further, a feature, such as automatic unlocking when the cover is flipped, is set based on a detected opening or closing status of the leather case or a detected opening or closing status of the flip cover.

The acceleration sensor 280E may detect a magnitude of accelerations in various directions (usually on three axes) of the electronic device 200. When the electronic device 200 is still, a magnitude and a direction of gravity may be detected. The acceleration sensor 280E may be further configured to identify an attitude of the electronic device, and is used in an application such as switching between a landscape mode and a portrait mode or a pedometer.

The distance sensor 280F is configured to measure a distance. The electronic device 200 may measure a distance in an infrared manner or a laser manner. In some embodiments, in a shooting scenario, the electronic device 200 may perform ranging by using the distance sensor 280F to implement fast focusing.

The optical proximity sensor 280G may include, for example, a light-emitting diode (LED) and an optical detector, such as a photodiode. The light-emitting diode may be an infrared light-emitting diode. The electronic device 200 emits infrared light by using the light-emitting diode. The electronic device 200 detects infrared reflected light from a nearby object by using the photodiode. When detecting sufficient reflected light, the electronic device 200 may determine that there is an object near the electronic device 200. When detecting insufficient reflected light, the electronic device 200 may determine that there is no object near the electronic device 200. The electronic device 200 may detect, by using the optical proximity sensor 280G, that a user holds the electronic device 200 close to an ear for a call, and automatically turn off a display for power saving. The optical proximity sensor 280G may also be used in a leather case mode or a pocket mode to automatically unlock or lock a screen.

The ambient light sensor 280L is configured to sense ambient light brightness. The electronic device 200 may adaptively adjust brightness of the display 294 based on the sensed ambient light brightness. The ambient light sensor 280L may also be configured to automatically adjust white balance during photographing. The ambient light sensor 280L may further cooperate with the optical proximity sensor 280G to detect whether the electronic device 200 is in a pocket, to avoid an accidental touch.

The fingerprint sensor 280H is configured to collect a fingerprint. The electronic device 200 may use a feature of the collected fingerprint to implement fingerprint-based unlocking, application lock access, fingerprint-based photographing, fingerprint-based call answering, and the like.

The temperature sensor 280J is configured to detect a temperature. In some embodiments, the electronic device 200 executes a temperature processing policy by using the temperature detected by the temperature sensor 280J. For example, when the temperature reported by the temperature sensor 280J exceeds a threshold, the electronic device 200 lowers performance of a processor near the temperature sensor 280J, to reduce power consumption and implement thermal protection. In some other embodiments, when the temperature is less than another threshold, the electronic device 200 heats the battery 242, to avoid abnormal shutdown of the electronic device 200 caused by a low temperature. In some other embodiments, when the temperature is less than still another threshold, the electronic device 200 boosts an output voltage of the battery 242, to avoid an abnormal shutdown caused by a low temperature.

The touch sensor 280K is also referred to as a "touch panel". The touch sensor 280K may be disposed in the display 294, and the touch sensor 280K and the display 294 constitute a touchscreen, which is also referred to as a "touch screen". The touch sensor 280K is configured to detect a touch operation performed on or near the touch sensor 280K. The touch sensor may transfer the detected touch operation to the application processor, to determine a type of a touch event. A visual output related to the touch operation may be provided on the display 294. In some other embodiments, the touch sensor 280K may alternatively be disposed on a surface of the electronic device 200, and is at a position different from that of the display 294.

The bone conduction sensor 280M may obtain a vibration signal. In some embodiments, the bone conduction sensor 280M may obtain a vibration signal of a vibration bone block of a human vocal-cord part. The bone conduction sensor 280M may also be in contact with a human pulse and receive a blood pressure beating signal.

In some embodiments, the bone conduction sensor 280M may also be disposed in a headset, to form a bone conduction headset. The audio module 270 may obtain a voice signal by parsing the vibration signal that is of the vibration bone block of the vocal-cord part and that is obtained by the bone conduction sensor 280M, to implement a voice function. The application processor may parse heart rate information based on the blood pressure beating signal obtained by the bone conduction sensor 280M, to implement a heart rate detection function.

The button 290 includes a power button, a volume button, and the like. The button 290 may be a mechanical button, or may be a touch button. The electronic device 200 may receive a button input, and generate a button signal input related to a user setting and function control of the electronic device 200.

The motor 291 may generate a vibration prompt. The motor 291 may be configured to provide an incoming call vibration prompt or a touch vibration feedback. For example, touch operations performed on different applications (for example, photographing and audio play) may correspond to different vibration feedback effect. The motor 291 may also correspond to different vibration feedback effect for touch operations performed on different regions of the display 294. Different application scenarios (for example, a time reminder, information receiving, an alarm clock, and a game) may correspond to different vibration feedback effect. A touch vibration feedback effect may be further customized.

The indicator 292 may be an indicator light, and may be configured to indicate a charging status and a power change, or may be configured to indicate a message, a missed call, a notification, and the like.

The SIM card interface 295 is configured to connect to a SIM card. The SIM card may be inserted into the SIM card interface 295 or removed from the SIM card interface 295, to implement contact with or separation from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be inserted into a same SIM card interface 295. The plurality of cards may be of a same type or different types. The SIM card interface 295 may be compatible with different types of SIM cards. The SIM card interface 295 may also be compatible with the external storage card. The electronic device 200 interacts with a network through the SIM card, to implement functions such as calling and data communication. In some embodiments, the electronic device 200 uses an eSIM. namely, an embedded SIM card. The eSIM card may be embedded in the electronic device 200, and cannot be separated from the electronic device 200.

With reference to a scenario in which the electronic device guides the user to perform exercise and fitness, the following uses an example in which the electronic device is the smart television or the smart screen, to describe a user determining method and an electronic device that are provided in embodiments of this application. It should be understood that the user determining method provided in an embodiment is further applicable to another human-computer interaction-based scenario.

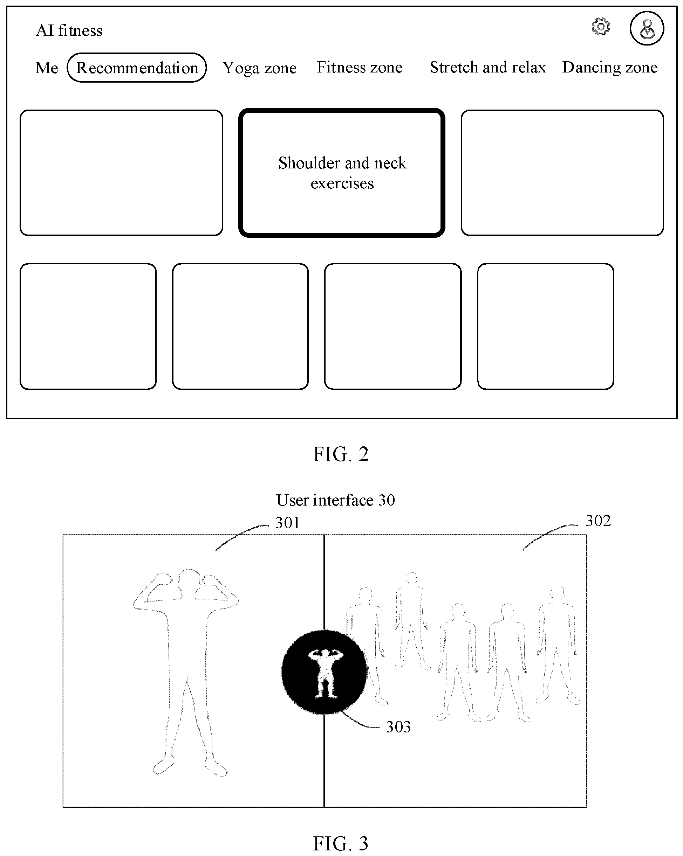

FIG. 2 is a schematic diagram of a display interface of an electronic device according to an embodiment of this application. The electronic device guides the user to perform fitness by running a fitness application (application, App). The electronic device usually provides different exercise items based on different apps. An artificial intelligence (artificial intelligence, AI) fitness app shown in FIG. 2A is used as an example. When the electronic device runs the AI fitness app, exercise items provided by the electronic device include a fitness item (for example, "shoulder and neck exercises"), and may include yoga, dance, and the like. The user may select an exercise item that the user wants to perform based on a requirement, such as the "shoulder and neck exercises" in the fitness item.

The exercise item (for example, the fitness item) in this embodiment is a sub-application set in an application that provides an exercise guidance service. One application usually includes a plurality of sub-applications. The electronic device can provide different instruction content by running different sub-applications.

Optionally, the user may select the exercise item by using a remote management or through voice control. For a voice control manner, for example, the user may control the electronic device to open the AI fitness app by using a first control voice (for example, "Hey Celia, open AI fitness"), and open "shoulder and neck exercises" by using a second control voice "I want to do shoulder and neck exercises". A specific voice control command is not limited in this embodiment.

After the user selects the exercise item, a terminal device controls a camera to be turned on, and determines a target user participating in the exercise item based on an image obtained by the camera. FIG. 3 shows an example of a user interface 30 displayed after a terminal device turns on a camera. As shown in the figure, the user interface 30 may include two regions 301 and 302. The region 301 displays a standard action, and a user may exercise based on the action shown in the region. The region 302 displays a picture shot by the camera. It can be learned from the figure that the picture shot by the camera includes a plurality of persons. In some embodiments, one action image 303 may be displayed on the user interface 30. The action image 303 is used to prompt the user to perform an action that is the same as an action of the image, so that the user becomes a target user. For example, the action may be double arm curl.

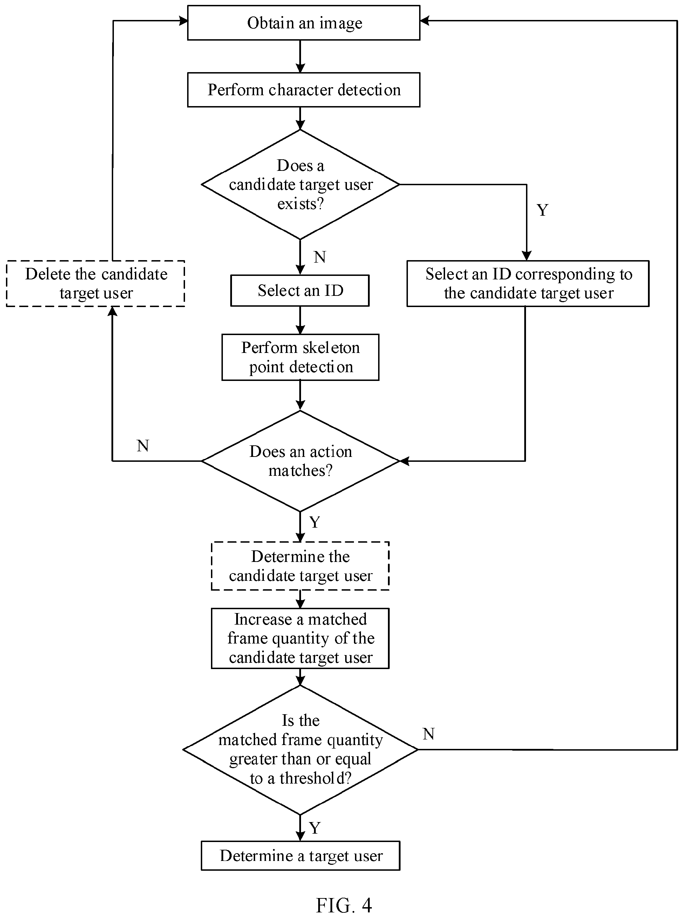

Next, an electronic device determines the target user by detecting the image obtained by the camera. FIG. 4 is a user determining method by using an electronic device according to this embodiment. In the method, for a plurality of users in each image, only one user is selected to perform skeleton point detection.

Step S402: Obtain a first image by using a camera. When a plurality of persons stand in front of the electronic device, the first image includes a plurality of persons.

Step S404: Detect the persons included in the image based on the obtained image. A quantity of persons may be detected first. One box is generated for each detected person based on edge information of the person. For example, if it is detected that the image includes five persons, five boxes are generated based on the edge information of each detected person, and each box includes one person. In some embodiments, the foregoing box is referred to as a character box. The character box surrounds a character image, and may be in a rectangle shape, an ellipse shape, or another shape. In some embodiments, character boxes do not overlap each other.

The image in the box is input into a feature extraction model, to generate a feature vector corresponding to the box. In some embodiments, the feature vector is 128 dimensions.

One ID is allocated to each box is allocated, to distinguish different persons. IDs may be randomly allocated, or may be allocated in a specific order, for example, the ID is allocated to each box from left to right in ascending order. For example, IDs allocated for the five boxes in the foregoing example are "0001", "0002", "0003", "0004", and "0005" from left to right.

Step S406: Select one of the IDs, and perform skeleton point detection on a character in an image corresponding to the ID, to determine whether the character meets an action requirement of an action image. In some embodiments, the ID may be randomly selected, or may be selected based on a specific rule. For example, an ID with a minimum value or a maximum value may be selected, or an ID corresponding to a person close to the middle of a display may be selected. In addition, a distance between each character in the first image and the display may be estimated by using a neural network, or depth information of each character may be obtained by using a depth camera, and a character closest to the display is selected for skeleton point detection. This is not limited in the present invention.

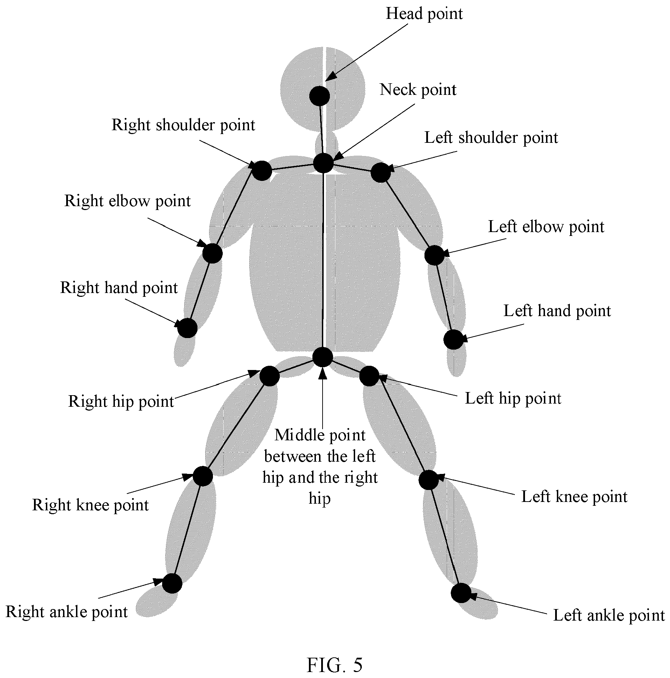

FIG. 5 is a schematic diagram of skeleton points. As shown in FIG. 5, the human skeleton key points may include a head point, a neck point, a left shoulder point, a right shoulder point, a right elbow point, a left elbow point, a right hand point, a left hand point, a right hip point, a left hip point, a middle point between the left hip and the right hip, a right knee point, a left knee point, a right ankle point, and a left ankle point. This embodiment of this application is not limited to the foregoing key points and may be further include another key point. This is not specifically limited herein.

When the skeleton points are detected, a skeleton point related to a detection action may be determined, and whether a feature related to the skeleton point matches a skeleton point feature of the standard action is detected. For example, for the double arm curl action shown in FIG. 3, positions of the right hand point, the right elbow point, and the right shoulder point, an included angle between a connection line of the right hand point and the right elbow point and a connection line of the right elbow point and the right shoulder point, positions of the left hand point, the left elbow point, and the left shoulder point, and an included angle between a connection line of the left hand point and the left elbow point and a connection line of the left elbow point and the left shoulder point may be detected, to determine whether the action matches the standard action.

Step S408: If a detection result meets the action requirement, determine the character corresponding to the ID as a candidate target user, and in addition, record a matched frame quantity corresponding to the ID as 1; or if a detection result does not meet the action requirement, processing for the current frame image ends.

Step S410: Obtain a second image by using the camera. The second image may be a next frame image of the first image, or may be an image at an interval of a predetermined frame quantity with the first image. For example, the predetermined frame quantity may be three frames, five frames, or the like. The predetermined frame quantity may be predetermined, and the frame quantity may be related to a time period for processing the image by the electronic device. For example, if the time period for processing the image is greater than a time period for obtaining a two-frame image by the camera and less than a time period for obtaining a three-frame image by the camera, it may be determined that the predetermined frame quantity is three frames.

Step S412: Perform character detection on the second image. First, same processing as that of the first image is performed. To be specific, a person included in the second image is detected, one box is generated for each detected person, and a feature vector of the box is obtained. For the foregoing steps, refer to processing for the first image. Details are not described herein.

After the feature vector of each box is obtained, each feature vector in the second image is matched with each feature vector in the first image. If a specific feature vector in the second image matches one feature vector in the first image, an ID corresponding to the feature vector of the first image is allocated to a corresponding box that corresponds to the feature vector in the second image. If a specific feature vector in the second image does not match one feature vector in the first image, a new ID is allocated to a box corresponding to the feature vector in the second image. The new ID is different from the ID allocated in the image 1. IDs may be randomly allocated, or may be allocated in a specific order.

Specifically, when it is determined whether feature vectors match, a cosine distance vector between two feature vectors may be calculated. If the cosine distance vector is less than one preset threshold, it indicates that the two feature vectors match.

Step S414: Determine whether a candidate target user currently exists, and if no candidate target user currently exists, select one of the IDs based on the method for the first image, and perform skeleton point detection on a character in an image corresponding to the ID and determining. Details are not described herein.

If the candidate target user currently exists, it is determined whether an ID corresponding to the candidate target user exists in the current image. If the ID exists, skeleton point detection is performed on a character corresponding to the ID, to determine whether the character meets the action requirement of the action image. If a detection result meets the action requirement, a matched frame quantity corresponding to the ID is increased by 1; or if a detection result does not meet the action requirement, the candidate target user is deleted, and a value of the matched frame quantity is cleared. Processing for the current frame image ends.

Step S416: Obtain a third image by using the camera, detect persons included in the image, generate one box for each detected person, obtain a corresponding feature vector, match each feature vector in the image with feature vectors of all the previous images, and allocate an ID to each box based on a matching result. For a specific step for the foregoing process, refer to processing for the first image and the second image. Details are not described herein.

If no candidate target user currently exists, one of IDs is selected based on the method for the first image, skeleton point detection are performed on a task in an image corresponding to the ID, and determining are performed. In some other embodiments, if the previously determined candidate target user is deleted, and the current image includes an ID corresponding to the user, another ID other than the ID may be selected.

If the candidate target user currently exists, it is determined whether an ID corresponding to the candidate target user exists in the current image. If the ID exists, skeleton point detection is performed on a character corresponding to the ID, to determine whether the character meets the action requirement of the action image. If a detection result meets the action requirement, a matched frame quantity corresponding to the ID is increased by 1; or if a detection result does not meet the action requirement, the candidate target user is deleted, and a value of the matched frame quantity is cleared.

Step S418: If the matched frame quantity reaches a predetermined matching threshold, determine the candidate target user as a target user; or if the matched frame quantity does not reach a predetermined matching threshold, continue to process a next image obtained by the camera. For a step for next processing, refer to the processing step for the third image. Details are not described herein.

By using the foregoing steps, when there are a plurality of persons currently, the electronic device may perform skeleton point analysis on only one person in each frame image, to reduce a hardware requirement and improve a response speed of the electronic device, so that the electronic device can process the image obtained by the camera in real time.

After the target user is determined, a user action may be continuously tracked and analyzed. Information related to the user is displayed on the display, such as a matching degree between the user action and the standard action, and a quantity of completed user actions. In some other embodiments, when the matching degree between the user action and the standard action exceeds a first threshold or is less than a second threshold, and the quantity of completed user actions is greater than a third threshold, or a difference between the quantity of completed user actions and a total quantity of actions is less than a fourth threshold, different prompt texts are displayed on the display or different prompt tones are played, to assist the user in performing exercise and enhance a sense of interaction between the user and the device.

When detecting that the action of the target user matches an exit action, the terminal device starts to perform steps S402 to S418 to determine a new target user. In some other embodiments, when the matching degree between the target user and the standard action is less than a fifth threshold or a time period in which the target user cannot be detected in the image obtained by the camera exceeds a sixth threshold, the terminal device performs steps S402 to S418 again to determine a new target user.

In some embodiments, when IDs of all users in the image are deleted candidate target users, a system may select, in a same ID selection manner as that of the first image, a character corresponding to one ID to perform skeleton point detection.

Because skeleton point detection on a plurality of characters in one image is extremely time-consuming, in the foregoing embodiment, when there are the plurality of persons in the image, only one person in each frame image is selected for processing, to reduce processing time for each frame image. A final target user is determined by polling the characters in the system. When there are the plurality of characters in the image, the method can ensure smooth running of a system, and reduce response time for determining the target user.

In settings of exercise items, some exercise items may be set as an individual exercise, and another exercise item may be set as needing to be jointly completed by a plurality of persons. A quantity of required users may be predetermined.

For the individual exercise item, the method in the foregoing embodiment may be used. To be specific, one of a plurality of characters is detected in each image, to determine the target user. For the exercise item needing to be jointly completed by the plurality of persons, the method in the foregoing embodiment may also be used. After one target user is determined, detection is performed on another user other than the target user in the image in a same step, to determine a second target user, until a quantity of determined target users meets a system requirement.

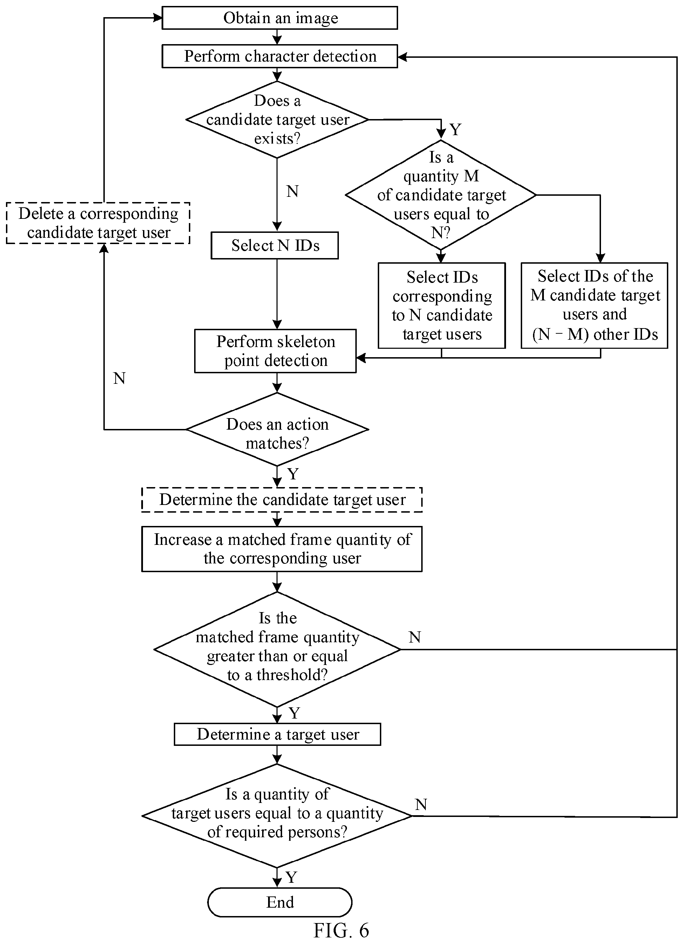

In some other embodiments, for the exercise item needing to be jointly completed by the plurality of persons, a plurality of users may be identified in each image. The following uses an example in which two users are identified in each frame image to describe this embodiment. FIG. 6 shows an example of a procedure in which an electronic device performs skeleton point detection on a plurality of users in each image.

Step S602: Obtain a first image by using a camera.

Step S604: Detect persons included in the image based on the obtained image. A quantity of persons may be detected first. One box is generated for each detected person based on edge information of the person. For example, if it is detected that the image includes five persons, five boxes are generated based on the edge information of each detected person, and each box includes one person.

An image in the box is input into a feature extraction model, to generate a feature vector corresponding to the box. In some embodiments, the feature vector is 128 dimensions.

One ID is allocated to each box, to distinguish different persons. IDs may be randomly allocated, or may be allocated in a specific order, for example, the ID is allocated to each box from left to right in ascending order. For example, IDs allocated for the five boxes in the foregoing example are "0001", "0002", "0003", "0004", and "0005" from left to right.

Step S606: Select two of the IDs, and perform skeleton point detection on characters in images corresponding to the IDs, to determine whether the characters meet an action requirement of an action image. In some embodiments, the ID may be randomly selected, or may be selected based on a specific rule. For example, one ID with a smallest value and one ID with a second smallest value, or one ID with a largest value and one ID with a second largest value may be selected, or two IDs corresponding to two person close to the middle of a display may be selected. In addition, a distance between each character in the first image and the display may be estimated by using a neural network, or depth information of each character may be obtained by using a depth camera, and a character closest to the display is selected for skeleton point detection. This is not limited in the present invention.

Step S608: If detection results of the two IDs both meet the action requirement, determine the characters corresponding to the two IDs as a candidate target user 1 and a candidate target user 2. In addition, a matched frame quantity 1 of the candidate target user 1 and a matched frame quantity 2 of the candidate target user 2 may be set, and values of both the matched frame quantity 1 and the matched frame quantity 2 are set as 1.

If a detection result of one of the two IDs meets the action requirement, and a detection result of the other ID does not meet the action requirement, the character corresponding to the ID meeting the action requirement is determined as a candidate target user 1. In addition, a matched frame quantity of the candidate target user may be set, and a value of the matched frame quantity is set as 1.

If detection results of the two IDs do not meet the action requirement, processing for the current frame image ends.

Step S610: Obtain a second image by using the camera, where the second image may be a next frame image of the first image, or may be an image at an interval of a predetermined frame quantity with the first image. For example, the predetermined frame quantity may be three frames, five frames, or the like. The predetermined frame quantity may be predetermined by a system, and the frame quantity may be related to a time period for processing the image by the system. For example, if the time period for processing the image is greater than a time period for obtaining a two-frame image by the camera and less than a time period for obtaining a three-frame image by the camera, it may be determined that the predetermined frame quantity is three frames.

Step S612: For the second image, first, same processing as that of the first image is performed. To be specific, persons included in the second image are detected, one box is generated for each detected person, and a feature vector of the box is obtained. For the foregoing steps, refer to processing for the first image. Details are not described herein.

After the feature vector of each box is obtained, each feature vector in the second image is matched with each feature vector in the first image. If a specific feature vector in the second image matches one feature vector in the first image, an ID corresponding to the feature vector of the first image is allocated to a corresponding box that corresponds to the feature vector in the second image. If a specific feature vector in the second image does not match one feature vector in the first image, a new ID is allocated to a box corresponding to the feature vector in the second image. The new ID is different from the ID allocated in an image 1. IDs may be randomly allocated, or may be allocated in a specific order.

Specifically, when it is determined whether feature vectors match, a cosine distance vector between two feature vectors may be calculated. If the cosine distance vector is less than one preset threshold, it indicates that the two feature vectors match.

Step S614: Determine whether a candidate target user currently exists, and determine a quantity of candidate target users.

If no candidate target user currently exists, two of the IDs are selected based on the method for the first image, and skeleton point detection are performed on characters in images corresponding to the two IDs, and determining are performed. Details are not described herein.

If one candidate target user currently exists, it is determined whether an ID corresponding to the candidate target user exists in the current image. If the ID exists, skeleton point detection is performed on the character corresponding to the ID, to determine whether the character meets the action requirement of the action image. If a detection result meets the action requirement, a matched frame quantity corresponding to the ID is increased by 1; or if a detection result does not meet the action requirement, the candidate target user is deleted, and a value of the matched frame quantity is cleared.

In addition, one ID is selected from other IDs other than the ID corresponding to the candidate target user in the second image, and skeleton point detection is performed on a character corresponding to the ID, to determine whether the character meets the action requirement of the action image. If a detection result meets the action requirement, the character corresponding to the ID may be set as a candidate target user 2, a matched frame quantity 2 corresponding to the candidate target user 2 is set, and a value of the matched frame quantity 2 is set as 1.

In some embodiments, skeleton point detection for the ID corresponding to one candidate target user and the ID selected from other IDs may be performed in parallel or in sequence.

If no ID corresponding to the candidate target user exists, the candidate target user is deleted, and a corresponding value of the matched frame quantity is cleared.

Two IDs are selected from other IDs other than the ID corresponding to the candidate target user in the second image, and skeleton point detection is performed on tasks corresponding to the two IDs. For a specific step, refer to the processing step for the first image. Details are not described herein.

If two candidate target users currently exist, it is determined whether IDs corresponding to the two candidate target users exist in the current image.

If both the two IDs exist, skeleton point detection continues to be performed on characters corresponding to the two IDs, to determine whether the characters meet the action requirement of the action image. If detection results are that both the IDs meet the action requirement, matched frame quantities corresponding to the two IDs are increased by 1. If one of the two IDs meets the action requirement, for example, an ID corresponding to the candidate target user 1 meets the action requirement, a matched frame quantity corresponding to the ID is increased by 1, the candidate target user 2 is deleted, and a value of a matched frame quantity 2 is cleared. If neither of the two IDs meets the action requirement, the two candidate target users are deleted, and the corresponding matched frame quantities are cleared.

If only one ID matches the candidate target user in the second image, an unmatched candidate target user is deleted, and a matched frame quantity corresponding to the unmatched candidate target user is cleared. Skeleton point detection is performed on a task corresponding to the matched ID, and one ID is selected from another ID other than the matched ID, to perform skeleton point detection.

If no ID matches the two candidate users in the second image, the two candidate target users are deleted, and matched frame quantities corresponding to the two candidate target users are cleared. Two IDs are selected from the IDs of the second image to perform skeleton point detection. For a specific step, refer to step S606. Details are not described herein.

Processing for the current frame image ends.

Step S616: Obtain a third image by using the camera, detect persons included in the image, generate one box for each detected person, obtain a corresponding feature vector, match each feature vector in the image with feature vectors of all the previous images, and allocate an ID to each box based on a matching result. For a specific step for the foregoing process, refer to processing for the first image and the second image. Details are not described herein.

Step S618: Determine whether a candidate target user currently exists, and determine a quantity of candidate target users.

If no candidate target user currently exists, two of IDs are selected based on the method for the first image, and skeleton point detection are performed on tasks in images corresponding to the two IDs, and determining are performed. In some other embodiments, if the previously determined candidate target user is deleted, and the current image includes an ID corresponding to the user, another ID other than the ID may be selected.

If one candidate target user currently exists, it is determined whether an ID corresponding to the candidate target user exists in the current image. If the ID exists, skeleton point detection is performed on the character corresponding to the ID, to determine whether the character meets the action requirement of the action image. In addition, one ID is selected from the another ID other than the ID corresponding to the candidate target user in the third image, to perform skeleton point detection. For a specific step, refer to step S614. Details are not described herein.

In some other embodiments, when selection is performed on the another ID, selection may be performed on the another ID other than both the ID corresponding to the candidate target user and the ID corresponding to the previously deleted candidate target user.

If two candidate target users currently exist, it is determined whether IDs corresponding to the two candidate target users exist in the current image. For a specific operating step, refer to step S614. Details are not described herein.

Step S620: Determine whether a matched frame quantity of the candidate target user reaches a threshold.

If the matched frame quantities of both the two candidate target users reach a preset matching threshold, the two candidate target users are determined as target users.

If a matched frame quantity of one candidate target user of the two candidate target users reaches the preset matching threshold, the candidate target user is determined as the target user. In subsequent image detection, if a quantity of required participants in the exercise item is 2, only one ID may be selected for detection. If the quantity of required participants in the exercise item is greater than 2, two IDs may be selected for detection until a quantity of determined target users is equal to the quantity of required participants.

In some other embodiments, a quantity of characters on which the system performs skeleton point analysis in a one-frame image is the same as the quantity of required participants in the exercise item.

By using the foregoing steps, in the multi-person scenario, the electronic device may perform skeleton point analysis once on the plurality of users, which is suitable for a scenario in which a plurality of persons need to jointly complete an exercise, and maintains a balance between a hardware requirement and a corresponding speed.

After the electronic device determines all target users required by the system, the electronic device continues to detect another person in the image captured by the camera. If an action matching degree of a current target user is less than a preset threshold, and an action of another person other than the target user matches the action shown in FIG. 3, the another person replaces the target user whose action matching degree is less than the preset threshold to become a new target user.

In some other embodiments, an interval frame quantity between images for detection may vary with a time sequence matching completion degree. Specifically, in an image detection process, the system determines whether the quantity of currently determined target users is the same as the quantity of required participants. If the quantity of determined target users is less than the quantity of required participants, the interval frame quantity may be set to remain unchanged at an initial value. If the quantity of determined target users is the same as the quantity of required participants, a matching degree between the target user action and the standard action is determined. If the matching degree between the target user action and the standard action is greater than a threshold, the interval frame quantity is updated. In next detection, an updated interval frame quantity is used to obtain an image for detection.

In some embodiments, updating the interval frame quantity includes increasing the interval frame quantity. When the interval frame quantity is updated, a threshold interval of the interval frame quantity may be set to [$T_{min}$, $T_{max}$], where an initial threshold is $T_{min}$.

When the user performs exercise following the standard action, the electronic device may record a matching degree between the target user action and the standard action in each image detection. When it is detected that the target user action matches the standard action, a quantity of matching times is increased by 1.

The interval frame quantity is determined by using the following formula:

$$S = \left\lceil \frac{m}{m_{max}} \times (T_{max} - T_{min}) + T_{min} \right\rceil$$

m represents a current quantity of matching times, $m_{max}$ represents a preset maximum value of the quantity of matching times, and the value may be a fixed value preset by the system. $T_{max}$ represents a maximum value of the interval frame quantity, $T_{min}$ represents a minimum value of the interval frame quantity, and $\lceil \ \rceil$ represents rounding up.

In some other embodiments, another rounding manner may be used for the foregoing formula, for example, a rounding-down manner or a rounding-off manner.

By using the foregoing method, when the action matching degree of the target user remains relatively high, the interval frame quantity for image detection increases, so that a probability of replacing the target user by another non-target user decreases.

In some embodiments, the determining the matching degree between the target user action and the standard action specifically includes: If a plurality of target users exist, the matching degree may be an average value of matching degrees between all target users and the standard action, or may be a matching degree corresponding to a user that has a lowest matching degree with the standard action in all target users.

The implementations of the present invention may be randomly combined, to achieve different technical effect.

In an implementation process, steps of the foregoing methods may be implemented by using a hardware integrated logic circuit in a processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and implements the steps in the foregoing methods in combination with hardware of the processor. To avoid repetition, details are not described herein.

It should be understood that sequence numbers of the foregoing processes do not mean execution sequences in various embodiments of this application. The execution sequences of the processes should be determined based on functions and internal logic of the processes, and should not constitute any limitation on the implementation processes in embodiments of this application.

An embodiment of this application further provides a computer-readable storage medium. The computer-readable storage medium stores a computer program, and the computer program is executed by a processor to implement the methods described in the foregoing embodiments. All or some of the methods described in the foregoing embodiments may be implemented by software, hardware, firmware, or any combination of software, hardware, and firmware. If the methods are implemented in the software, functions may be used as one or more instructions or code and stored in the computer-readable medium or transmitted on the computer-readable medium. The computer-readable medium may include a computer storage medium and a communication medium, and may further include any medium that can transfer a computer program from one place to another place. The storage medium may be any available medium accessible to a computer.

In an optional design, the computer-readable medium may include a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM) or another optical disk memory, a magnetic disk memory or another magnetic storage device, or any other medium that may be used to carry, or stores required program code in a form of an instruction or a data structure, and may be accessed by a computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical disks used in this specification include a compact disc (CD), a laser disc, an optical disc, a digital versatile disc (DVD), a floppy disk, and a Blu-ray disc. The magnetic disk usually magnetically reproduces data, and the optical disk optically reproduces data by using a laser. The foregoing combinations shall also be included within the scope of the computer-readable medium. It should be understood that the processor in embodiments of this application may be a central processing unit (central processing unit, CPU), another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

The computer program includes computer program code. The computer program code may be in a source code form, an object code form, an executable file form, some intermediate forms, or the like.

An embodiment of this application provides a computer program product. When the computer program product runs on an electronic device, the electronic device is enabled to implement the methods described in the foregoing embodiments. All or some of the methods described in the foregoing embodiments may be implemented by software, hardware, firmware, or any combination of software, hardware, and firmware. If the methods are implemented in the software, all or some of the methods may be implemented in a form of the computer program product. The computer program product includes one or more computer instructions. When the computer program instructions are loaded and executed on a computer, all or some of the procedures or functions described in the method embodiments are generated. The computer may be a general-purpose computer, a dedicated computer, a computer network, a network device, user equipment, or another programmable apparatus.

In the foregoing embodiments, the descriptions of each embodiment have respective focuses. For a part of an embodiment that is not described in detail or explained, refer to related descriptions of another embodiment.

In the description of embodiments of this application, unless otherwise stated, "/" means "or", for example, A/B may represent A or B. The term "and/or" in this specification describes only an association relationship between associated objects, and indicates that three relationships may exist. For example, A and/or B may represent three cases: Only A exists, both A and B exist, and only B exists. In addition, in the description of embodiments of this application, "a plurality of" means "two or more".

The terms above "first" and "second" are only intended for a purpose of description, and shall not be interpreted as indicating or implying relative importance or implying a quantity of indicated technical features. Therefore, a feature defined with "first" or "second" may explicitly or implicitly include one or more features. In the description of embodiments, unless otherwise specified, "a plurality of" means two or more.

Reference to "an embodiment", "some embodiments", or the like described in this specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but is not limited to", unless otherwise specifically emphasized in another manner.

The foregoing embodiments are only intended to describe the technical solutions of this application, but are not to limit this application.

**Claims**

1. A target user determining method, applied to an electronic device, wherein the method comprises:

   obtaining a first image;
   determining a quantity of users comprised in the first image;
   selecting one or more users from the determined users comprised in the first image to perform skeleton point detection, and determining whether actions of the one or more users match a target action;
   if it is detected that the actions of the selected one or more users match the target action, collecting statistics on a quantity of consecutive matching times of the one or more users; and
   if the quantity of consecutive matching times meets a first condition, determining the one or more users as a target user,
   wherein the method further comprises:

   after the electronic device determines the target user,
   continuing to detect another user in captured images; and
   if an action matching degree of the target user is less than a preset threshold and an action of another user other than the target user matches the target action, replacing the target user whose action matching degree is less than the preset threshold with the another user such that the another user becomes a new target user.

2. The method according to claim 1, wherein the selecting one or more users from the users comprised in the first image to perform skeleton point detection comprises:

   determining a location of each user comprised in the first image on a display; and
   selecting one or more users closer to the middle of the display for skeleton point detection.

3. The method according to claim 1 or 2, wherein before the selecting one or more users from the users comprised in the first image to perform skeleton point detection, the method further comprises:

   generating a first character box for a determined first user comprised in the first image, wherein the first character box surrounds an image of the first user;
   performing feature extraction on the user image comprised in the first character box, to obtain a first feature vector; and
   allocating a first identification code to the first character box.

4. The method according to any one of claim 1 to 3, wherein the selecting one or more users from the users comprised in the first image to perform skeleton point detection comprises:

   determining whether a candidate target user exists; and
   if the candidate target user exists, selecting the candidate target user to perform skeleton point detection.

5. The method according to claim 4, further comprising: if it is detected that the candidate target user does not match the target action, deleting the candidate target user and clearing the quantity of consecutive matching times.

**6.** The method according to claim 5, further comprising: if the candidate target user is deleted, selecting one user from another user other than the deleted candidate target user in the users comprised in the first image, to perform skeleton point detection.

**7.** The method according to any one of claims 1 to 6, further comprising:

if the actions of the users do not match the target action, obtaining a second image; and determining a quantity of users comprised in the second image.

**8.** The method according to claim 7, further comprising:

generating a second character box for a determined second user comprised in the second image, wherein the second character box surrounds an image of the second user;
performing feature extraction on the user image comprised in the second character box, to obtain a second feature vector;
determining whether the second feature vector is the same as the first feature vector; and
if the second feature vector is the same as the first feature vector, allocating the first identification code to the second character box.

**9.** The method according to claim 7 or 8, further comprising:
obtaining the second image at an interval of a first frame quantity after the first image is obtained.

**10.** The method according to any one of claims 1 to 9, wherein
a quantity of users is the same as a quantity of required participants.

**11.** The method according to any one of claims 1 to 10, wherein
if a quantity of determined target users is less than the quantity of required participants, the quantity of users is a difference between the quantity of required participants and the quantity of determined target users.

**12.** The method according to any one of claims 1 to 11, further comprising:

if the quantity of determined target users is equal to the quantity of required participants, recording a quantity of matching times between an action of the target user and a standard action, and obtaining an image at an interval of a second frame quantity; and
the second frame quantity is in a direct proportion to the quantity of matching times.

**13.** An electronic device, wherein the electronic device comprises a camera, a memory, and a processor, and the camera is configured to capture an image, the memory is configured to store a computer program, and the processor is configured to invoke the computer program, to enable the electronic device to perform the method according to any one of claims 1 to 12.

**14.** A computer storage medium, comprising computer instructions, wherein when the computer instructions are run on an electronic device, the electronic device is enabled to perform the method according to any one of claims 1 to 12.

**Patentansprüche**

**1.** Zielbenutzerbestimmungsverfahren, das auf eine elektronische Vorrichtung angewendet wird, wobei das Verfahren umfasst:

Erhalten eines ersten Bildes;
Bestimmen einer Anzahl von Benutzern, die in dem ersten Bild enthalten sind;
Auswählen eines oder mehrerer Benutzer aus den bestimmten Benutzern, die in dem ersten Bild enthalten sind, um eine Skelettpunkterkennung durchzuführen, und
Bestimmen, ob Handlungen des einen oder der mehreren Benutzer mit einer Zielhandlung übereinstimmen;
falls bestimmt wird, dass die Handlungen des einen oder der mehreren ausgewählten Benutzer mit der Zielhandlung übereinstimmen, Sammeln von Statistiken über eine Anzahl aufeinanderfolgender Übereinstimmungsmale des einen oder der mehreren Benutzer; und
falls die Anzahl aufeinanderfolgender Übereinstimmungsmale eine erste Bedingung erfüllt, Bestimmen des einen oder der mehreren Benutzer als einen Zielbenutzer wobei das Verfahren ferner umfasst:

nachdem die elektronische Vorrichtung den Zielbenutzer bestimmt,
Fortfahren mit dem Erkennen eines anderen Benutzers in aufgenommenen Bildern; und
falls ein Handlungsübereinstimmungsgrad des Zielbenutzers geringer ist als ein voreingestellter Schwellenwert und eine Handlung eines anderen Benutzers als des Zielbenutzers mit der Zielhandlung übereinstimmt, Ersetzen des Zielbenutzers, dessen Handlungsübereinstimmungsgrad geringer ist als der voreingestellte Schwellenwert,

durch den anderen Benutzer, so dass der andere Benutzer zu einem neuen Zielbenutzer wird.

2. Verfahren nach Anspruch 1, wobei das Auswählen eines oder mehrerer Benutzer aus den Benutzern, die in dem ersten Bild enthalten sind, zum Durchführen der Skelettpunkterkennung umfasst:

Bestimmen einer Position jedes Benutzers, der in dem ersten Bild enthalten ist, auf einer Anzeige; und

Auswählen eines oder mehrerer Benutzer, die sich näher an der Mitte der Anzeige befinden, für die Skelettpunkterkennung.

3. Verfahren nach Anspruch 1 oder 2, wobei das Verfahren vor dem Auswählen eines oder mehrerer Benutzer aus den Benutzern, die in dem ersten Bild enthalten sind, zum Durchführen der Skelettpunkterkennung ferner umfasst:

Erzeugen eines ersten Zeichenfelds für einen bestimmten ersten Benutzer, der in dem ersten Bild enthalten ist, wobei das erste Zeichenfeld ein Bild des ersten Benutzers umgibt;

Durchführen einer Merkmalsextraktion an dem Benutzerbild, das in dem ersten Zeichenfeld enthalten ist, um einen ersten Merkmalsvektor zu erhalten; und

Zuweisen eines ersten Identifikationscodes zu dem ersten Zeichenfeld.

4. Verfahren nach einem der Ansprüche 1 bis 3, wobei das Auswählen eines oder mehrerer Benutzer aus den Benutzern, die in dem ersten Bild enthalten sind, zum Durchführen der Skelettpunkterkennung umfasst:

Bestimmen, ob ein potenzieller Zielbenutzer existiert; und

falls der potenzielle Zielbenutzer existiert, Auswählen des potenziellen Zielbenutzers zum Durchführen der Skelettpunkterkennung.

5. Verfahren nach Anspruch 4, das ferner umfasst:
falls erkannt wird, dass der potenzielle Zielbenutzer nicht mit der Zielhandlung übereinstimmt, Löschen des potenziellen Zielbenutzers und Löschen der Anzahl aufeinanderfolgender Übereinstimmungsmale.

6. Verfahren nach Anspruch 5, das ferner umfasst:
falls der potenzielle Zielbenutzer gelöscht ist, Auswählen eines Benutzers aus einem anderen Benutzer, der nicht der gelöschte potenzielle Zielbenutzer ist, unter den Benutzern, die in dem ersten Bild enthalten sind, zum Durchführen der Skelettpunkterkennung.

7. Verfahren nach einem der Ansprüche 1 bis 6, das ferner umfasst:

falls die Handlungen der Benutzer nicht mit der Zielhandlung übereinstimmen, Erhalten eines zweiten Bildes; und

Bestimmen einer Anzahl von Benutzern, die in dem zweiten Bild enthalten sind.

8. Verfahren nach Anspruch 7, das ferner umfasst:

Erzeugen eines zweiten Zeichenfelds für einen bestimmten zweiten Benutzer, der in dem zweiten Bild enthalten ist, wobei das zweite Zeichenfeld ein Bild des zweiten Benutzers umgibt;

Durchführen einer Merkmalsextraktion an dem Benutzerbild, das in dem zweiten Zeichenfeld enthaltenen ist, um einen zweiten Merkmalsvektor zu erhalten;

Bestimmen, ob der zweite Merkmalsvektor der gleiche ist wie der erste Merkmalsvektor; und

falls der zweite Merkmalsvektor der gleiche ist wie der erste Merkmalsvektor, Zuweisen des ersten Identifikationscodes zu dem zweiten Zeichenfeld.

9. Verfahren nach Anspruch 7 oder 8, das ferner umfasst:
Erhalten des zweiten Bildes in einem Intervall einer ersten Rahmenanzahl, nachdem das erste Bild erhalten wurde.

10. Verfahren nach einem der Ansprüche 1 bis 9, wobei eine Anzahl von Benutzern die gleiche ist wie eine Anzahl von erforderlichen Teilnehmern.

11. Verfahren nach einem der Ansprüche 1 bis 10, wobei falls eine Anzahl von bestimmten Zielbenutzern geringer ist als die Anzahl von erforderlichen Teilnehmern, die Anzahl von Benutzern eine Differenz zwischen der Anzahl von erforderlichen Teilnehmern und der Anzahl von bestimmten Zielbenutzern ist.

12. Verfahren nach einem der Ansprüche 1 bis 11, das ferner umfasst:

falls die Anzahl von bestimmten Zielbenutzern gleich der Anzahl von erforderlichen Teilnehmern ist, Aufzeichnen einer Anzahl von Übereinstimmungsmalen zwischen einer Handlung des Zielbenutzers und einer Standardhandlung und Erhalten eines Bildes in einem Intervall einer zweiten Rahmenanzahl; und

die zweite Rahmenanzahl steht in einem direkten Verhältnis zu der Anzahl der Übereinstimmungsmale.

13. Elektronische Vorrichtung, wobei die elektronische Vorrichtung eine Kamera, einen Speicher und einen Prozessor umfasst und die Kamera konfiguriert ist, um ein Bild aufzunehmen, der Speicher konfiguriert ist, um ein Computerprogramm zu speichern, und der Prozessor konfiguriert ist, um das Computerprogramm aufzurufen, um die elektronische Vorrichtung in die Lage zu versetzen, das Verfahren nach einem der Ansprüche 1 bis 12 durchzuführen.

14. Computerspeicherungsmedium, das Computeranweisungen umfasst, wobei, wenn die Computeranweisungen auf einer elektronischen Vorrichtung ausgeführt werden, die elektronische Vorrichtung in die Lage versetzt wird, das Verfahren nach einem der Ansprüche 1 bis 12 durchzuführen.

**Revendications**

1. Procédé de détermination d'utilisateur cible, appliqué à un dispositif électronique, dans lequel le procédé comprend :

   l'obtention d'une première image ;
   la détermination d'une quantité d'utilisateurs compris dans la première image ;
   la sélection d'un ou plusieurs utilisateurs à partir des utilisateurs déterminés compris dans la première image pour réaliser une détection de point de squelette, et le fait de déterminer si des actions du ou des utilisateurs correspondent à une action cible ;
   s'il est détecté que les actions du ou des utilisateurs sélectionnés correspondent à l'action cible, la collecte de statistiques sur une quantité de temps de correspondance consécutifs du ou des utilisateurs ; et
   si la quantité de temps de correspondance consécutifs remplit une première condition, la détermination du ou des utilisateurs en tant qu'utilisateur cible dans lequel le procédé comprend en outre :

      après la détermination, par le dispositif électronique, de l'utilisateur cible,
      la poursuite de la détection d'un autre utilisateur dans des images capturées ; et
      si un degré de correspondance d'action de l'utilisateur cible est inférieur à un seuil prédéfini et une action d'un autre utilisateur autre que l'utilisateur cible correspond à l'action cible, le remplacement de l'utilisateur cible dont le degré de correspondance d'action est inférieur au seuil prédéfini par l'autre utilisateur de telle sorte que l'autre utilisateur devient un nouvel utilisateur cible.

2. Procédé selon la revendication 1, dans lequel la sélection d'un ou plusieurs utilisateurs à partir des utilisateurs compris dans la première image pour réaliser une détection de point de squelette comprend :

   la détermination d'un emplacement de chaque utilisateur compris dans la première image sur un écran ; et
   la sélection d'un ou plusieurs utilisateurs plus proches du milieu de l'écran pour la détection de point de squelette.

3. Procédé selon la revendication 1 ou 2, dans lequel avant la sélection d'un ou plusieurs utilisateurs à partir des utilisateurs compris dans la première image pour réaliser une détection de point de squelette, le procédé comprend en outre :

   la génération d'une première matrice de caractère pour un premier utilisateur déterminé compris dans la première image, dans lequel la première matrice de caractère entoure une image du premier utilisateur ;
   la réalisation d'une extraction de caractéristique sur l'image utilisateur comprise dans la première matrice de caractère, pour obtenir un premier vecteur de caractéristiques ; et
   l'attribution d'un premier code d'identification à la première matrice de caractère.

4. Procédé selon l'une quelconque des revendications 1 à 3, dans lequel la sélection d'un ou plusieurs utilisateurs à partir des utilisateurs compris dans la première image pour réaliser une détection de point de squelette comprend :

   le fait de déterminer si un utilisateur cible candidat existe ; et
   si l'utilisateur cible candidat existe, la sélection de l'utilisateur cible candidat pour réaliser une détection de point de squelette.

5. Procédé selon la revendication 4, comprenant en outre :
   s'il est détecté que l'utilisateur cible candidat ne correspond pas à l'action cible, la suppression de l'utilisateur cible candidat et l'effacement de la quantité de temps de correspondance consécutifs.

6. Procédé selon la revendication 5, comprenant en outre :
   si l'utilisateur cible candidat est supprimé, la sélection d'un utilisateur à partir d'un autre utilisateur autre que l'utilisateur cible candidat supprimé dans les utilisateurs compris dans la première image, pour réaliser une détection de point de squelette.

**7.** Procédé selon l'une quelconque des revendications 1 à 6, comprenant en outre :

si les actions des utilisateurs ne correspondent pas à l'action cible, l'obtention d'une seconde image ; et
la détermination d'une quantité d'utilisateurs compris dans la seconde image.

**8.** Procédé selon la revendication 7, comprenant en outre :

la génération d'une seconde matrice de caractère pour un second utilisateur déterminé compris dans la seconde image, dans lequel la seconde matrice de caractère entoure une image du second utilisateur ;
la réalisation d'une extraction de caractéristique sur l'image utilisateur comprise dans la seconde matrice de caractère, pour obtenir un second vecteur de caractéristique ;
le fait de déterminer si le second vecteur de caractéristique est identique au premier vecteur de caractéristiques ; et
si le second vecteur de caractéristique est identique au premier vecteur de caractéristique, l'attribution du premier code d'identification à la seconde matrice de caractère.

**9.** Procédé selon la revendication 7 ou 8, comprenant en outre :
l'obtention de la seconde image à un intervalle d'une première quantité de trame après l'obtention de la première image.

**10.** Procédé selon l'une quelconque des revendications 1 à 9, dans lequel une quantité d'utilisateurs est identique à une quantité de participants requis.

**11.** Procédé selon l'une quelconque des revendications 1 à 10, dans lequel si une quantité d'utilisateurs cibles déterminés est inférieure à la quantité de participants requis, la quantité d'utilisateurs est une différence entre la quantité de participants requis et la quantité d'utilisateurs cibles déterminés.

**12.** Procédé selon l'une quelconque des revendications 1 à 11, comprenant en outre :

si la quantité d'utilisateurs cibles déterminés est égale à la quantité de participants requis, l'enregistrement d'une quantité de temps de correspondance entre une action de l'utilisateur cible et une action standard, et l'obtention d'une image à un intervalle d'une seconde quantité de trame ; et
la seconde quantité de trame est directement proportionnelle à la quantité de temps de correspondance.

**13.** Dispositif électronique, dans lequel le dispositif électronique comprend une caméra, une mémoire et un processeur, et la caméra est configurée pour capturer une image, la mémoire est configurée pour stocker un programme informatique, et le processeur est configuré pour appeler le programme informatique pour activer le dispositif électronique afin de réaliser le procédé selon l'une quelconque des revendications 1 à 12.

**14.** Support de stockage informatique, comprenant des instructions informatiques, dans lequel, lorsque les instructions informatiques sont exécutées sur un dispositif électronique, le dispositif électronique est activé pour réaliser le procédé selon l'une quelconque des revendications 1 à 12.

FIG. 1

EP 4 307 168 B1

AI fitness

Me ( Recommendation )   Yoga zone    Fitness zone     Stretch and relax   Dancing zone

Shoulder and neck
exercises

**FIG. 2**

User interface 30

301

302

303

**FIG. 3**

```
                          ┌─────────────────────┐
                    ┌────►│   Obtain an image   │◄────────┐
                    │     └─────────────────────┘         │
                    │              │                      │
                    │     ┌─────────────────────┐         │
                    │     │ Perform character    │         │
                    │     │     detection        │         │
                    │     └─────────────────────┘         │
                    │              │                      │
                    │         ╱Does a ╲                   │
                    │        ╱ candidate ╲   Y            │
                    │        ╲ target user ╲──────┐       │
                    │         ╲ exists? ╱          │       │
                    │              │ N             │       │
         ┌──────────┴──┐          │          ┌─────▼──────────────┐
         │ Delete the  │   ┌────────────┐    │ Select an ID        │
         │ candidate   │   │ Select an ID│    │ corresponding to    │
         │ target user │   └────────────┘    │ the candidate       │
         └─────────────┘          │          │ target user         │
                    │     ┌────────────────┐ └────────────────────┘
                    │     │ Perform skeleton│        │
                    │     │ point detection │        │
                    │     └────────────────┘        │
                    │   N      │                     │
                    └──────╱Does an action╲◄─────────┘
                            ╲  matches? ╱
                                 │ Y
                         ┌───────────────────┐
                         │ Determine the      │
                         │ candidate target   │
                         │ user               │
                         └───────────────────┘
                                 │
                         ┌───────────────────┐
                         │ Increase a matched │
                         │ frame quantity of  │
                         │ the candidate      │
                         │ target user        │
                         └───────────────────┘
                                 │
                         ╱Is the          ╲   N
                        ╱ matched frame     ╲──────────┐
                        ╲ quantity greater   ╲          │
                        ╲ than or equal      ╱          │
                         ╲ to a threshold? ╱            │
                                 │ Y                    │
                         ┌───────────────────┐          │
                         │ Determine a target│          │
                         │ user              │          │
                         └───────────────────┘
```

FIG. 4

FIG. 5

```
                    ┌──────────────────────────┐
         ┌─────────►│      Obtain an image       │
         │          └──────────────┬─────────────┘
         │          ┌──────────────▼─────────────┐
         │          │  Perform character detection │◄────────────────────┐
         │          └──────────────┬─────────────┘                       │
         │                  ╱──────▼──────╲                               │
         │                 ╱   Does a      ╲      Y                       │
         │                ◄ candidate target ►─────────►                  │
         │                 ╲   user exists? ╱         ╱────▼────╲         │
         │                  ╲──────┬──────╱          ╱  Is a     ╲        │
         │                         │ N               ╱ quantity M ╲       │
┌────────┴──────────┐              │                ◄ of candidate ►──────┤
│Delete a corresponding│           │                 ╲ target users╱      │
│candidate target user │     ┌─────▼──────┐           ╲  equal to  ╱      │
└────────┬──────────┘        │ Select N IDs│           ╲    N?    ╱       │
         │                   └─────┬──────┘         Y   ╲────┬───╱        │
         │                         │              ┌──────────▼────┐  ┌────▼──────────┐
         │                         │              │  Select IDs    │  │ Select IDs of the│
         │                         │              │ corresponding  │  │ M candidate target│
         │                         │              │ to N candidate │  │   users and     │
         │                         │              │  target users  │  │ (N − M) other IDs│
         │                  ┌──────▼──────┐        └──────┬────────┘  └────┬──────────┘
         │                  │  Perform skeleton│◄──────────────────────────┘
         │                  │  point detection │
         │                  └──────┬──────┘
         │  N               ╱──────▼──────╲
         └─────────────────◄  Does an action ►
                            ╲   matches?   ╱
                             ╲──────┬──────╱
                                    │ Y
```

**EP 4 307 168 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111368810 A